# EUROPÄISCHE PATENTSCHRIFT

(11) **EP 2 964 975 B1**
(45) Veröffentlichungstag und Bekanntmachung des Hinweises auf die Patenterteilung: **19.04.2017**
(21) Anmeldenummer: 13717946.1
(22) Anmeldetag: 07.03.2013
(51) Int. Cl.: F16G 1/20, F16G 5/16

(54) **ENDLOSBAND MIT EINEM BANDKÖRPER AUS METALL UND VERFAHREN ZUR ÜBERPRÜFUNG DER PORENGRÖSSE IN DER BANDOBERFLÄCHE DER BANDAUSSENSEITE**
ENDLESS BELT HAVING A BELT BODY MADE OF METAL AND METHOD FOR CHECKING THE PORE SIZE IN THE BELT SURFACE OF THE OUTER BELT SIDE
BANDE SANS FIN À CORPS EN MÉTAL ET PROCÉDÉ DE CONTRÔLE DE LA TAILLE DES PORES DANS LA SURFACE DE LA BANDE CÔTÉ EXTÉRIEUR

(43) Veröffentlichungstag der Anmeldung: 13.01.2016
(73) Patentinhaber: Berndorf Band GmbH, 2560 Berndorf (AT)
(72) Erfinder: SCHUSTER, Roland, A-2560 Berndorf (AT)
(74) Vertreter: Burger, Hannes
(86) Internationale Anmeldenummer: PCT/AT2013/050059
(87) Internationale Veröffentlichungsnummer: WO 2014/134639

(56) Entgegenhaltungen:
- EP-A1- 1 221 562
- WO-A1-2006/057547
- WO-A2-2006/024526
- GB-A- 811 178
- JP-A- 2004 279 214

## Beschreibung

Endlosband mit einem Bandkörper aus Metall, wobei das Endlosband eine Bandaußenseite und eine Bandinnenseite aufweist, die durch Seitenflächen, miteinander verbunden sind, wobei jede der Seitenflächen einen kleineren Flächeninhalt aufweist, als die Bandaußenseite oder die Bandinnenseite.

Weiters betrifft die Erfindung ein Verfahren zur Herstellung eines Endlosbandes mit einem Bandkörper aus Metall, wobei das Endlosband eine Bandaußenseite und eine Bandinnenseite aufweist, die durch Seitenflächen, miteinander verbunden sind, wobei jede der Seitenflächen einen kleineren Flächeninhalt aufweist, als die Bandaußenseite oder die Bandinnenseite.

Bänder der eingangs genannten Art kommen beispielsweise bei der Herstellung von Filmen, insbesondere Triacetatfilmen, wie sie für die Produktion von LCD-Bildschirrmen verwendet werden, zum Einsatz. Derartige Bänder können auch bei der Produktion von Membranen oder Folien, beispielsweise EVA-Folien oder Verpackungsfolien, zum Einsatz kommen. Auch bei anderen Anwendungen - vor allem bei chemisch technischen Prozessen - wie beispielsweise der Aufbereitung von Mineralöl, finden Vorrichtungen der eingangs genannten Art Verwendung. So wird bei der Aufbereitung von Mineralöl der während eines Entschwefelungsprozesses anfallende Schwefel üblicherweise in flüssiger Form auf ein Kühlband aufgebracht, auf dessen Oberfläche die Schwefeltropfen Pastillen bilden, welche nach einem Abkühlen von dem Kühlband entfernt werden.

Ein Endlosband der eingangs genannten Art ist aus der EP1221562A1 bekannt geworden.

Insbesondere bei Anwendungen, welche sich mit der Herstellung von Folien beschäftigt, hat sich herausgestellt, dass mit herkömmlichen Bändern der Nachteil verbunden ist, dass sich keine fehlerfreien Folien. Membranen bzw. Filme herstellen lassen.

Es ist daher eine Aufgabe der Erfindung den oben genannten Nachteil des Stands der Technik zu überwinden.

Diese Aufgabe wird mit einem Endlosband gemäß Anspruch 1 gelöst.

Es hat sich herausgestellt, dass in Membranen, Folien, Filmen etc., die mit einschlägigen Endlosbändern, insbesondere hochwertigen Filmen, hergestellt werden, auftretende Fehler hauptsächlich durch Poren in der Oberfläche der Endlosbänder herrühren, die eine gewisse Größe aufweisen. Mit dem erfindungsgemäßen Band ist es auf einfache Weise möglich, fehlerfreie Filme herzustellen. Unter dem Begriff Porengröße wird hierbei der größte, in der Bandoberfläche liegende Durchmesser der Pore verstanden.

Als besonders vorteilhaft auch in Hinblick auf die Laufeigenschaften hat sich herausgestellt, dass das Endlosband über die gesamte Oberfläche der Bandinnenseite betrachtet keine Poren oder nur Poren mit einer Größe bis zu maximal 70 µm aufweist.

Gemäß einer Variante der Erfindung, welche sich durch besonders gute Eigenschaften hinsichtlich einer Reparatur der Bandoberfläche auszeichnet und ein Band betrifft, welches aus zwei oder mehreren längsgeschweißten Bändern zusammengesetzt ist, kann es vorgesehen sein, dass das Endlosband zumindest zwei längsseitig verbundene Bänder aufweist, wobei im Bereich einer Verbindungsstelle der zumindest zwei Bänder keine unter der Oberfläche der Verbindungsstelle eingeschlossenen Hohlräume vorhanden sind. Diese Ausführung der Erfindung zeichnet sich dadurch aus, dass auch bei einer Reparatur oder materialabtragenden Nachbearbeitung der Bandoberfläche keine unter der Oberfläche verborgenen Poren geöffnet werden können. Eine vorteilhafte Variante der Erfindung sieht vor, dass die Verbindungsstelle eine Schweißnaht ist.

Nach einer weiteren Variante der Erfindung kann es vorgesehen sein, dass das Endlosband zumindest eine Verbindungsstelle aufweist, an welcher stirnseitige Endbereiche des Endlosbandes miteinander verbunden sind, wobei in einem Bereich der Verbindungstelle keine unter der Oberfläche der Verbindungsstelle eingeschlossenen Hohlräume vorhanden sind. Auch hier kann es vorgesehen sein, dass die Verbindungsstelle eine Schweißnaht ist.

Nach einer besonders günstigen Weiterentwicklung der erfindungsgemäßen Lösung kann die Oberfläche der Bandaußenseite und/oder der Bandinnenseite über den gesamten Bereich der Oberfläche homogen ausgebildet sein. Durch eine homogen ausgebildete Bandinnenseite lässt sich die Laufruhe des Endlosbandes verbessern, während durch eine homogen ausgebildete Bandaußenseite die Qualität der Oberflächenbeschaffenheit eines mithilfe des Endlosbandes hergestellten Produktes wesentlich erhöht werden kann.

Eine Ausführungsform der Erfindung, welche sich zur Realisierung einer defektfreien Bandoberfläche sehr gut eignet, besteht darin, dass die Oberfläche der Bandaußenseite und/oder der Bandinnenseite durch zumindest eine auf den Bandkörper aufgetragene Schicht gebildet ist.

Vorteilhafterweise kann es vorgesehen sein, dass die Oberfläche der Bandaußenseite und/oder der Bandinnenseite über den gesamten Bereich der Oberfläche einen konstanten Glanzgrad bei einer unter einem Messwinkel von 60° oder 85° durchgeführten Glanzgradmessung aufweist.

Gemäß einer günstigen Weiterbildung der Erfindung können die Bandaußenseite und/oder die Bandinnenseite eine polierte Oberfläche, insbesondere eine hochglanzpolierte Oberfläche, aufweisen.

Eine Variante der Erfindung sieht vor, dass das Endlosband nahtlos ausgebildet ist. Unter dem Begriff nahtlos wird hierbei verstanden, dass, falls das Band eine Füge-bzw. Verbindungsstelle aufweist, welche die Endabschnitte des Bandes miteinander verbindet, keine sichtbare Naht vorhanden ist, oder dass das Band keine Füge-bzw. Verbindungsstelle aufweist, welche die Endabschnitte des Bandes miteinander verbindet. Durch die nahtlose Ausbildung des Endlosbandes wird eine lokale Schwächung des Materials, wie sie eine Schweißnaht darstellt, vermieden. Darüber hinaus kann auch vermieden werden, dass sich bei einer Verwendung des Endlosbandes als Filmgießband ein Abdruck der Schweißnaht in dem hergestellten Film wieder findet.

Gemäß einer besonders vorteilhaften Ausführungsform der Erfindung, welche sich unter anderem durch eine hohe mechanische Belastbarkeit auszeichnet, kann es vorgesehen sein, dass der Bandkörper über seine gesamte in Umfangsrichtung des Endlosbandes verlaufende Längserstreckung einen gleichartigen strukturellen Aufbau aufweist. An dieser Stelle sei darauf hingewiesen, dass der Begriff "gleichartiger struktureller Aufbau" nicht ausschließt, dass die Struktur des Materials im Rahmen natürlicher Schwankungen variiert und das Material Fehlerstellen aufweisen kann, wie sie bei der Produktion des Bandkörpers an sich auftreten können.

Eine vorteilhafte Weiterbildung der Erfindung sieht vor, dass die Bandaußenseite und/oder die Bandinnenseite jeweils eine über ihre gesamte in Umfangsrichtung des Endlosbandes verlaufende Längserstreckung gleichartige Oberflächenausbildung aufweisen. Durch diese Variante der Erfindung kann beispielsweise beim Filmgießen eine sehr gute Qualität des erzeugten Produktes erzielt werden. Darüber hinaus wird bei dieser Ausführungsform ebenfalls eine sehr hohe mechanische Belastbarkeit erzielt, da es in der Oberfläche keine lokal ausgezeichneten Stellen gibt, welche von vorneherein schwächer oder anders ausgebildet sind als andere Stellen. Somit kann die Ausbildung von potentiellen produktionsbedingten Unstetigkeitsstellen in dem Band sehr effizient vermieden werden. In Zusammenhang mit dieser Ausführungsform der Erfindung gilt, dass der Begriff "eine gleichartige Oberflächenausbildung" nicht ausschließt, dass natürliche Schwankungen in der Oberflächenstruktur vorhanden sein können. An dieser Stelle sei auch darauf hingewiesen, dass die Oberfläche der Bandaußenseite sich von der Oberfläche der Bandinnenseite unterscheiden kann.

Entsprechend einer sehr günstigen Ausführungsform der Erfindung kann das Endlosband über seine gesamte Umfangslänge eine gleichbleibende Wärmekapazität und/oder gleiche optische und/oder mechanische Eigenschaften aufweisen.

Eine ebenfalls sehr vorteilhafte Variante der Erfindung sieht vor, dass das Endlosband einen Verbindungsbereich aufweist, an welchem stirnseitige Endbereiche des Bandkörpers miteinander verbunden sind, sodass ein Ring gebildet wird, wobei der strukturelle Aufbau des Verbindungsbereiches gleichartig mit daran angrenzenden anderen Bereichen des Bandkörpers ausgebildet ist. Unter dem Begriff "gleichartig" wird hierbei verstanden, dass im Rahmen natürlicher Schwankungen eine Übereinstimmung hinsichtlich des räumlichen Aufbaus bzw. der Gitterstruktur oder des Gefüges gegeben ist.

Die oben genannte Aufgabe kann auch mit einem Verfahren der eingangs genannten Art erfindungsgemäß dadurch gelöst werden, dass in einem Überprüfungsschritt überprüft wird, ob Poren mit einer Größe von über 10 µm oder 20 µm bzw. 30 µm, insbesondere von über 50 bis 70 µm, in der Oberfläche der Bandaußenseite und/oder der Bandinnenseite vorhanden sind, und in einem dem Überprüfungsschritt zeitlich nachfolgenden Reparaturschritt zumindest derartige Poren repariert werden. An dieser Stelle sei darauf hingewiesen, dass in diesem Dokument unter Herstellungsverfahren auch Verfahren zur Reparatur eines Bandes verstanden werden, welche das Ziel haben, den Zustand eines erfindungsgemäßen Bandes (wieder) herzustellen.

Gemäß einer vorteilhaften Ausführungsform des erfindungsgemäßen Verfahrens kann es vorgesehen sein, dass eine Reparatur der Poren durch Umformen, Fügen, Spanen, Richten, Wärmebehandlung, Schleifen, Schmieden, Schweißen oder Beschichten des Endlosbandes erfolgt. So kann beispielsweise eine Reparatur der Poren durch ein Verfahren erfolgen, bei welchem um eine Pore ein Materialabtrag erfolgt und hernach in einen Bereich, in welchem der Materialabtrag stattgefunden hat ein Material eingebracht und mit dem Band verschweißt wird, sodass die Pore durch ein Schweißverfahren geschlossen wird. Ein derartiges Verfahren ist beispielsweise aus der WO 2009/140710 A1 bekannt geworden. Alternativ oder zusätzlich können auch andere bzw. weitere der oben genannten Verfahren zum Einsatz kommen, um Poren in der Oberfläche zu beseitigen, wie beispielsweise Schleifen und/oder Beschichten etc.

Eine weitere günstige Variante der Erfindung besteht darin, dass während eines Verbindens zweier oder mehrerer Bänder entlang von Längskanten der Bänder zu einem einzigen Band größerer Breite, welches dann an Stirnseiten zu dem Endlosband verbunden wird und/oder einem Verbinden der Stirnseiten eines Bandkörpers zu dem Endlosband überwacht wird, ob sich in der Verbindungsstelle Poren, Ablagerungen oder Hohlräume bilden. Auf diese Weise lässt sich die Qualität der Verbindungsstelle während des Herstellungsprozesses überprüfen. Das Verbinden selbst kann in vorteilhafter Weise durch ein Schweißverfahren erfolgen, insbesondere Laserschweißen, MIG/MAG-Schweißen, WIG-Schweißen, Rührschweißen, Reibrührschweißen, Ultraschallschweißen, Widerstandsschweißen, Feuerschweißen, Schweißen mit und ohne Schutzgas sowie Schweißen in einer Reinraumatmosphäre.

Um zu überprüfen, ob in dem Schweißbad Gasblasen oder Verschmutzungen eingeschlossen sind, kann es vorgesehen sein, dass das Schweißbad während der Verbindens permanent überwacht wird und mit zumindest einem Sensor elektromagnetische Emissionen erfasst werden, wobei erfasste Istwerte für die Emissionen mit Sollwerten verglichen werden, wobei bei einer vorgebbaren Abweichung der Istwerte von den Sollwerten eine den von den Sollwerten abweichenden Istwerten entsprechende Stelle einer Schweißnaht nochmals geschweißt wird, wobei dieser Vorgang solange wiederholt wird, an keiner Stelle der Schweißnaht keine außerhalb einer Toleranzgrenze gelegene Abweichung der erfassten Istwerte von den Sollwerten erfasst wurde.

Um eine Qualitätskontrolle der Endlosbänder und eine Dokumentation des Herstellungsprozesse zu ermöglichen, können die erfassten Istwerte aufgezeichnet und einer individuellen Identifikation eines bearbeiteten Endlosbandes zugewiesen und gemeinsam mit dieser gespeichert werden.

Die Qualität der Verbindungs- bzw. Schweißstelle lässt sich dadurch weiter verbessern, dass zumindest die Verbindungsstellen nach dem Verbinden des Bandes zu dem Endlosband oder dem Verbinden der Bänder zu einem Band, nachbearbeitet werden, insbesondere durch Schleifen, Strahlen, insbesondere Kugelstrahlen, Hämmern, insbesondere hochfrequentes Hämmern, und/oder Wärmebehandlung.

Besonders gute mechanische Eigenschaften sowie eine homogene Oberfläche des Endlosbandes lassen sich dadurch erzielen, dass der Umformprozess ein Schmiedeprozess ist, wobei der Schmiedeprozess ein Kaltumformprozess oder eine Kombination aus Kalt- und Warmumformprozessen mit oder ohne zwischengeschalteten Wärmebehandlungen ist. An dieser Stelle sei darauf hingewiesen, dass in dem vorliegenden Zusammenhang unter dem Begriff "Schmiedeprozess" auch die Prozesse des Walzens, Härtens, Anlassens und Schleifens verstanden werden.

Gemäß einer besonders vorteilhaften Variante der Erfindung kann es vorgesehen sein, dass der Bandkörper als bandförmiges Ausgangsmaterial vorliegt und freie stirnseitige Endbereiche des Bandkörpers durch den Schmiedeprozess miteinander verbunden werden, wobei die stirnseitigen Endbereiche des Bandkörpers einander angenähert werden, sodass sich die stirnseitigen Endbereiche gegenüberliegen und ein Einlagematerial in einen zwischen den beiden Endbereichen gebildeten Spalt ein- und/oder darüber gelegt wird, welches aus dem gleichen Material wie der Bandkörper besteht, wobei das Einlagematerial und die beiden Endbereiche durch Schläge von zumindest einem Hammer umgeformt und miteinander verbunden werden. Nach einer anderen Variante der Erfindung kann das Ausgangsmaterial zur Herstellung des Endlosbandes eine Metallplatine sein, welche durch Walzen über einen Dorn mit einem zylinderförmigen Querschnitt getrieben wird, sodass sich eine zylindermantelförmige Hülse ergibt, durch welche der Bandkörper gebildet ist. Ein Einspannteil des Ausgangsmaterials kann nach Fertigstellung der Hülse von dieser abgeschnitten werden, sodass sich ein durchgehendes zylindermantelförmiges Band ergibt. Auf diese Weise lässt sich ebenfalls ein nahtloses Endlosband mit einer weitgehend homogenen Struktur erzielen.

Zum besseren Verständnis der Erfindung wird diese anhand der nachfolgenden Figuren näher erläutert, in welchen ein nicht einschränkendes Ausführungsbeispiel dargestellt ist.

Es zeigen jeweils in schematisch stark vereinfachter Darstellung:
Fig. 1 eine mögliche Ausbildung eines als Endlosband ausgebildeten Metallbandes;
Fig. 2 einen Metallstreifen zur Bildung eines Metallbandes, in ebener Lage, in Draufsicht;
Fig. 3 einen Querschnitt einer möglichen Ausbildung einer Längsverbindungsnaht eines Metallbandes gemäß den Schnittlinien III-III in Fig. 2.
Fig. 4 eine erste Vorrichtung zur Herstellung eines Endlosbandes;
Fig. 5 eine zweite Vorrichtung zur Herstellung eines Endlosbandes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

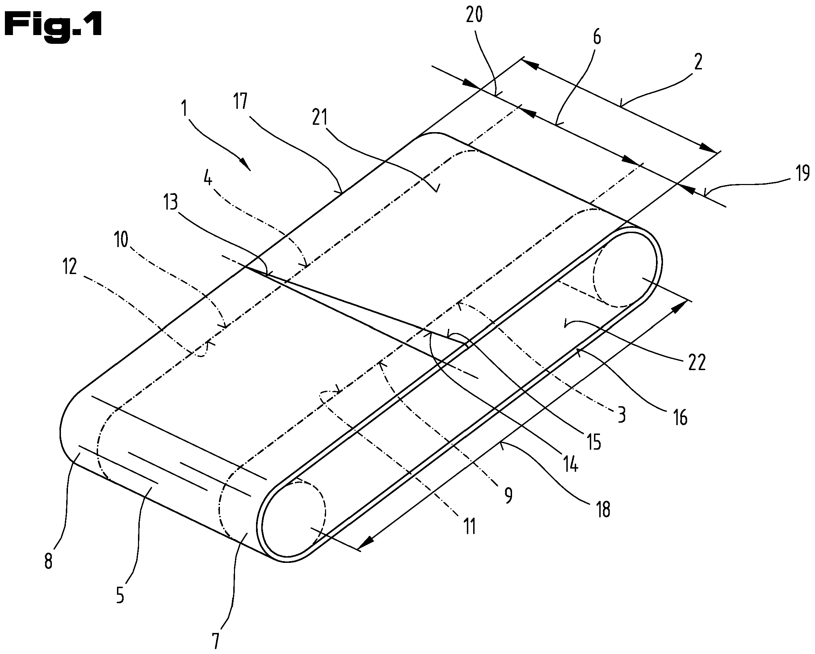

In der Fig. 1 ist schematisch vereinfacht ein Metallband 1, insbesondere ein endloses Stahlband, gezeigt, welches eine Gesamtbreite 2 quer zu seiner Längserstreckung aufweist, welche breiter sein kann als derzeit üblicherweise herstellbare Metallbänder 1 in gewissen Qualitäten und Zusammensetzungen. Im Folgenden werden die Begriffe und Metallband Synonym für einander verwendet. Das Endlosband 1 weist einen Bandkörper aus Metall auf. Eine Bandaußenseite und eine Bandinnenseite sind durch Seitenflächen miteinander verbunden. Jede der Seitenflächen weist einen kleineren Flächeninhalt auf als die Bandaußenseite oder die Bandinnenseite. D.h. die Dicke des Endlosbandes 1 ist kleiner als dessen Gesamtbreite 2. Erfindungsgemäß weist das Endlosband über die gesamte Oberfläche der Bandaußenseite betrachtet keine Poren oder nur Poren mit einer Größe bis maximal zu 70 µm auf. Das Endlosband kann auch über die gesamte Oberfläche der Bandinnenseite betrachtet keine Poren oder nur Poren mit einer Größe bis zu maximal 70 µm aufweist. Besonders bevorzugt weist das Endlosband 1 keine Poren oder nur Poren kleiner als 50 µm, insbesondere kleiner als 40 µm oder 30 µm, ganz besonders bevorzugt kleiner als 20 µm oder 10 µm, auf. Im Idealfall weist das Endlosband 1 jedoch keine Poren auf.

Um eine größere Gesamtbreite 2 zu erzielen, kann das Metallband 1 in Richtung seiner Längserstreckung aus mehreren nebeneinander angeordneten Bandabschnitten gebildet werden. Dabei wird an gegenüberliegenden Längsseitenkanten 3, 4 eines Mittelbandabschnittes 5 mit einer Bandbreite 6 jeweils ein erster sowie zweiter Seitenbandabschnitt 7, 8 angeordnet und damit verbunden. Dies erfolgt durch vereinfacht dargestellte Längsverbindungsnähte 9, 10. Der Mittelbandabschnitt 5 mit seiner Bandbreite 6 wird aus einem vorgefertigten Blechabschnitt gebildet, wobei vor der Verbindung mit dem oder den Seitenbandabschnitten 7, 8 die Längsseitenkanten 3, 4 des Mittelbandabschnittes 5 sowie gegebenenfalls auch Längsseitenkanten 11, 12 der beiden Seitenbandabschnitte 7, 8 einem je nach gewähltem Verbindungsverfahren geeigneten Vorbereitungsverfahren unterzogen werden. Bei einem erfindungsgemäßen Endlosband 1 sind in einem Bereich der längsseitigen Verbindungstellen keine unter der Oberfläche der Verbindungsstelle eingeschlossenen Hohlräume vorhanden.

Bevorzugt werden derartige Metallbänder 1, insbesondere dann, wenn es sich dabei um Stahlbänder handelt, mittels eines Schweißvorganges verbunden. Weiters kann zur Herstellung des endlos umlaufenden Metallbandes 1 dieses an einander zugewendeten Stirnenden 13, 14 mit einer Querverbindungsnaht 15 verbunden werden, wobei in einem Bereich der Verbindungstelle, d.h. in diesem Fall der Querverbindungsnaht 15, keine unter der Oberfläche der Verbindungsstelle eingeschlossenen Hohlräume vorhanden sind.

Es kann so vorgegangen werden, dass der Mittelbandabschnitt 5 zuerst mit den beiden Seitenbandabschnitten 7, 8 in deren Längserstreckung verbunden wird und anschließend die Querverbindungsnaht 15 ausgebildet wird. Bei diesem hier gezeigten Ausführungsbeispiel ist die Querverbindungsnaht 15 unter einem vorbestimmten Winkel bezüglich außenliegender Längsseitenkanten 16, 17 des Metallbandes 1 verlaufend angeordnet. Es wäre aber auch möglich, eine rechtwinkelige Ausrichtung der Querverbindungsnaht 15 bezüglich der Längsseitenkanten 16, 17 zu wählen.

In Abhängigkeit von der Bandstärke des Metallbandes 1 und des dabei verwendeten Werkstoffes ist der Radius der Umlenkung des Bandes entsprechend darauf abzustimmen. Dabei ergibt sich bei einem geradlinig verlaufenden Bandverlauf des Metallbandes 1 zwischen voneinander distanzieren Umlenkstellen ein Abstand 18 zwischen diesen. Sind weitere Umlenkungen des Metallbandes 1 vorgesehen, verkürzt sich der Abstand 18 dementsprechend. Die beiden Seitenbandabschnitte 7, 8 werden zumeist mit einer annähernd gleichen Breite 19, 20 ausgebildet. In Summe gesehen ergibt sich die Gesamtbreite 2 des Metallbandes 1 durch die Bandbreite 6 des Mittelbandabschnittes 5 sowie den beiden Breiten 19, 20 der Seitenbandabschnitte 7, 8. Je nach gewähltem Verbindungsverfahren zur Ausbildung der Längsverbindungsnähte 9, 10 kann dies zu geringfügigen Abweichungen in der Breite bzw. der Gesamtbreite 2 führen. Bevorzugt werden die einander zugewandten Längsseitenkanten 3, 11 sowie 4, 12 bei einer Verbindung mit einem Schweißvorgang stirnseitig aneinanderstoßend angeordnet und in dieser Stellung miteinander verbunden. Wird als Verbindungsverfahren ein Schweißvorgang gewählt, kann dies beispielsweise durch eine Schutzgasschweißung, eine Laserschweißung, eine Plasmaschweißung oder dergleichen Anwendung erfolgen.

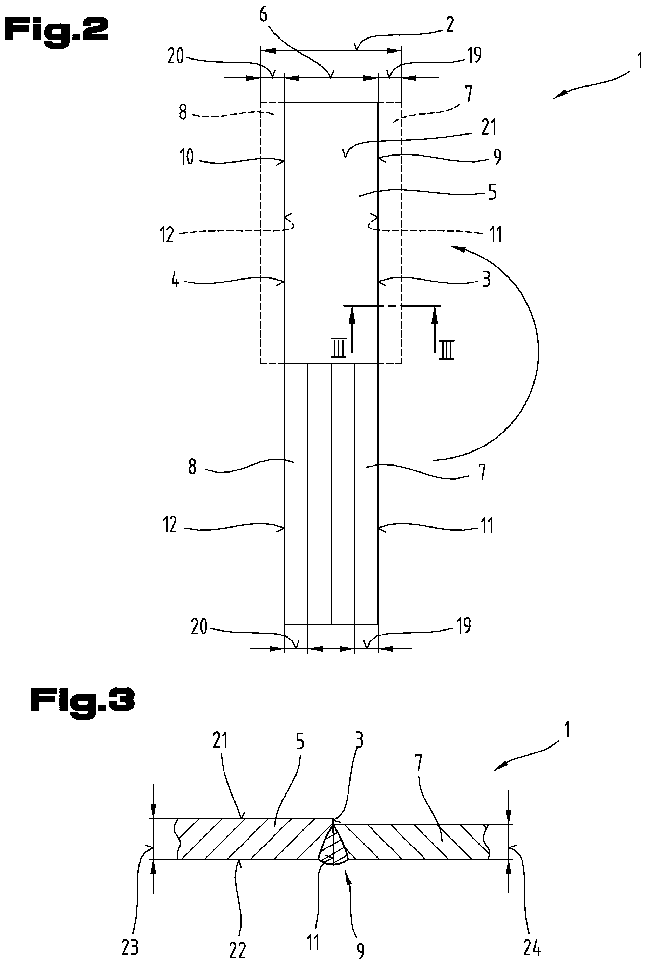

In der Fig. 2 ist eine von vielen Möglichkeiten zur Bildung des Metallbandes 1 aus mehreren nebeneinander angeordneten Bandabschnitten 5, 7, 8 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Bei dieser Ausbildung des Metallbandes 1 kann es sich gegebenenfalls um eine eigenständige Ausführungsform handeln.

Bei der Herstellung des Metallbandes 1 wird zumeist so vorgegangen, dass der dafür vorgesehene Werkstoff in einem Gießvorgang zu einem Metallblock gegossen wird, welcher anschließend in einem Walzvorgang zum entsprechenden Blech umgeformt, insbesondere gewalzt wird. In Abhängigkeit von der für das Blechwalzen zur Verfügung stehenden Breite der Anlage ist auch die maximale Breite des damit herstellbaren Bleches festgelegt bzw. begrenzt. Bei derzeit bekannten und üblichen Walzanlagen für derartige hochwertige Bleche kann eine Blechbreite von ca. 2000 mm hergestellt werden. Werden für gewisse Produktions- bzw. Herstellvorgänge breitere Metallbänder 1 benötigt, ist dieses beispielsweise durch Nebeneinanderanordnung zu verbreitern.

Bei sehr präzise und hochempfindlich herzustellenden Gegenständen, bei welchen das Metallband 1 als Auflage dient, spielt auch die Anordnung und Ausbildung der Längsverbindungsnähte 9, 10 eine wesentliche Rolle. Bei gewissen Anwendungen zur Herstellung von sehr dünnen, folienartigen Gegenständen auf dem Metallband 1, kann das herzustellende, folienartige Bandmaterial seitlich über die Längsverbindungsnähte 9, 10 hin auf die äußeren Längsseitenkanten 16 17 vorragen. Dieses überbreite Folienmaterial wird anschließend an dessen Herstellung, gegebenenfalls unter Zwischenschaltung einiger zusätzlicher Bearbeitungsschritte, im Bereich seiner Längsränder besäumt und beschnitten, wodurch eine Konfektionierung in Richtung von dessen Breite erfolgt. So können dann jene Seitenabschnitte des Folienmaterials entfernt werden, welche beispielsweise während der Herstellung desselben im Bereich der Längsverbindungsnähte 9, 10 abgestützt waren. Damit kann annähernd die volle Bandbreite 6 des Mittelbandabschnittes 5 für die endgültige maximale Breite genutzt werden.

Wird Folienmaterial hergestellt, kann dieses z.B. mittels eines gleichmäßigen Gießvorganges oder dergleichen aufgebracht werden, wobei das Basismaterial breiter aufgetragen werden kann als die Bandbreite 6 des Mittelbandabschnittes 5. Dieser seitliche Überstand kann auf den beiden Seitenbandabschnitten 7, 8 abgestützt werden.

Als Folienmaterial kann z.B. ein Polymer-Film als Breitfilm, eine Membran, Ethylenvinylacetat (EVA) Folien, etc. hergestellt werden. Das Basismaterial wird auf die Oberfläche des Metallbandes 1 aufgebracht, insbesondere gegossen und daraus anschließend hochwertige optische Filme oder Folien gebildet. Ein möglicher Werkstoff ist Cellulose Triacetat (CTA) auch als Triacetat oder TAC-Film bekannt, bei dem es sich um einen Kunststoff handelt, der aus Cellulose in einer Reaktion mit Essigsäure gewonnen wird. Dabei wird in einem kontinuierlichen Prozess das CTA Polymer, welches mit einem Lösungsmittel, wie z.B. Dichlormethan versetzt ist, auf die Oberfläche des Metallbandes aufgebracht und danach gemeinsam mit dem Metallband 1 durch einen Trocknungsofen hindurchbewegt. Dabei verdampft das Lösungsmittel und bei Erreichen einer ausreichenden Festigkeit kann der getrocknete Film vom Metallband abgezogen werden. Dieses CTA -Folienmaterial kann unter anderem für die Herstellung von LCD-Bildschirmen verwendet werden. Dabei wird der CTA -Film als beidseitige Schutzfolie auf die Polarisatoren aufgebracht. Dies erfolgt zumeist in einem Laminiervorgang.

Je nach herzustellender Bandlänge wird von einem Blechstreifen zuerst der Mittelbandabschnitt 5 zur Herstellung des Metallbandes 1 abgetrennt, wie dies in der Fig. 2 angedeutet ist. Vom gleichen Blechstreifen des restlichen Bandmaterials wird ein weiterer Längsabschnitt gebildet, welcher bevorzugt in seiner Längserstreckung der Länge des Mittelbandabschnittes 5 entspricht. Je nach gewünschter Breite 19, 20 der Seitenbandabschnitte 7, 8 werden diese in Längsrichtung von dem verbleibenden weiteren Längsabschnitt des Blechstreifen abgetrennt. Wie bereits zuvor beschrieben, werden die beiden Längsseitenkanten 3, 4 des Mittelbandabschnittes 5 für den nachfolgenden Verbindungsvorgang entsprechend vorbereitet. Diese Vorbereitung der Längsseitenkanten 11, 12 kann ebenfalls an den beiden Seitenbandabschnitten 7, 8 erfolgen.

Der zur Herstellung des Metallbandes 1 zur Verfügung stehende Blechstreifen weist zumeist in seinem rohen Ausgangszustand über seinen Querverlauf zwischen den beiden Längsseitenkanten 3, 4 eine nicht konstante Blechstärke bzw. Wanddicke auf. Bedingt durch den Walzvorgang und die dabei auftretenden Durchbiegungen der Walzen ist der Ausgangsblechstreifen in seinem Mittelbereich geringfügig dicker als in seinen Randbereichen ausgebildet. Um auch im Bereich der auszubildenden Längsverbindungsnähte 9, 10 eine annähernd gleiche Wandstärke der zu verbindenden Seitenbandabschnitte 7, 8 mit dem Mittelbandabschnitt 5 und seinen Längsseitenkanten 3, 4 zur Verfügung zu haben, wird die beim rohen Blechstreifen jeweils außenliegende Längsseitenkante 11, 12 der Seitenbandabschnitte 7, 8 jeweils den Längsseitenkanten 3, 4 des Mittelbandabschnittes 5 zugewendet. Dabei ist in Längserstreckung des rohen Blechstreifens gesehen, die hier rechts angeordnete Längsseitenkante 3 des Mittelbandabschnittes 5 und die Längsseitenkante 11 des ersten Seitenbandabschnittes 7 hintereinander angeordnet. Gleiches gilt aber auch für die links dargestellte Längsseitenkante 4 des Mittelbandabschnittes 5 und die weitere Längsseitenkante 12 des zweiten Seitenbandabschnittes 8. Vor dem Fügen des oder der Seitenbandabschnitte 7, 8 mit dem Mittelbandabschnitt 5 kann die bereits zuvor erwähnte Vorbereitung von deren Längsseitenkanten 3, 4 sowie 11, 12 erfolgen.

Vor dem Fügevorgang zwischen den Seitenbandabschnitten 7, 8 mit dem Mittelbandabschnitt 5 erfolgt zumeist eine Qualitätskontrolle beider Oberflächen von beiden Seitenbandabschnitten 7, 8.

Im Einsatzfall weist das Metallband 1 eine dem herzustellenden bzw. abzustützenden Produkt bzw. Gegenstand eine diesem zugewendete Außenfläche 21 sowie eine davon abgewendete Innenfläche 22 auf, wie dies in der Fig. 1 dargestellt ist.

Bei der in der Fig. 2 dargestellten Draufsicht auf die Blechstreifen bildet beispielsweise die hier dargestellte Ansichtsseite die Außenfläche 21 aus. Bei den abgetrennten und vorbereiteten Seitenbandabschnitten 7, 8 wird dann in Abhängigkeit von der zuvor durchgeführten Prüfung der Oberflächenqualität entschieden, ob die hier dargestellte Oberseite oder Unterseite nach dem Verbinden mit dem Mittelbandabschnitt 5 die Außenfläche 21 des Metallbandes 1 ausbildet. Damit kann jene Oberfläche des Seitenbandabschnittes 7, 8 gewählt werden, welche qualitativ höherwertiger ist.

Für den Bindungsvorgang zwischen den Längsseitenkanten 3, 11 sowie 4, 12 wird zumeist ein Schweißprozess eingesetzt. Bevorzugt erfolgt die Schweißung derart, dass der Mittelbandabschnitt 5 und zumindest einer der Seitenbandabschnitte 7, 8 einer nicht näher dargestellten Schweißvorrichtung zugeführt werden. Zur Durchführung des Schweißvorganges ist die Schweißvorrichtung zumeist ortsfest angeordnet. Es werden dabei die zu verbindenden Bandabschnitte 5, 7, 8 entsprechend geführt an der Schweißvorrichtung vorbeibewegt und dabei die Längsverbindungsnaht 9 und/oder 10 ausgebildet. So kann die Schweißrichtung der Längsverbindungsnähte 9, 10 in Richtung der Längsverbindungsnähte 9, 10 gesehen, entweder zueinander gleich oder entgegengesetzt zueinander gewählt werden. Grundsätzlich können beliebige Schweißverfahren eingesetzt werden. Als besonders vorteilhaft haben sich Laserschweißen, MIG/MAG-Schweißen, WIG-Schweißen, Rührschweißen, Reibrührschweißen, Ultraschallschweißen, Widerstandsschweißen, Feuerschweißen, Schweißen mit und ohne Schutzgas sowie Schweißen in einer Reinraumatmosphäre als besonders vorteilhaft herausgestellt.

Ein Schweißbad kann während des Verbindens permanent überwacht und mit zumindest einem Sensor, beispielsweise einem Infrarotsensor, einer Infrarotkamera, einen mit einer wellenlängenselektiven Beschichtung versehenen Halbleiter, etc. elektromagnetische Emissionen erfasst werden. Hierbei erfasste Istwerte für die Emissionen können mit Sollwerten verglichen werden, wobei bei einer vorgebbaren Abweichung der Istwerte von den Sollwerten eine den von den Sollwerten abweichenden Istwerten entsprechende Stelle einer Schweißnaht nochmals geschweißt wird. Dieser Vorgang kann solange wiederholt werden, bis an keiner Stelle der Schweißnaht eine außerhalb einer Toleranzgrenze gelegene Abweichung der erfassten Istwerte von den Sollwerten mehr gemessen werden. Zum Vergleich von Ist- und Sollwerten kann eine Auswerteinheit, beispielsweise ein entsprechend programmierter Mikro- oder Signalprozessor, vorgesehen sein. Die Auswerteinheit kann mit einer Steuerung eines Schweißkopfes verbunden sein, welche den Schweißkopf an die als fehlerhaft detektierte Schweißstelle zurückführt, um den Schweißprozess an dieser Stelle zu wiederholen.

Auch können die erfassten Istwerte aufgezeichnet und einer individuellen Identifikation eines bearbeiteten Endlosbandes 1 zugewiesen und gemeinsam mit dieser in einer mit der Auswerteeinheit verbundenen Speichereinheit gespeichert werden.

Sämtliche Verbindungsstellen können nach dem Verbinden zu dem Endlosband 1 nachbearbeitet werden, insbesondere durch Schleifen, Strahlen, insbesondere Kugelstrahlen, Hämmern, insbesondere hochfrequentes Hämmern, und/oder Wärmebehandlung, Polieren etc.

In der Fig. 3 ist eine mögliche und gegebenenfalls für sich eigenständige Ausbildung der Längsverbindungsnaht 9 zwischen dem Mittelbandabschnitt 5 und dem ersten Seitenbandabschnitt 7 im Querschnitt und in vergrößerter Darstellung gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen. Bei diesem hier gezeigten Ausführungsbeispiel weist der Mittelbandabschnitt 5 im Bereich seiner Längsseitenkante 3 eine Wandstärke 23 auf, welche größer ist als eine Wandstärke 24 des ersten Seitenbandabschnittes 7 im Bereich seiner Längsseitenkante 11. Dabei ist zu ersehen, dass die die Innenfläche 22 bildenden Oberflächen des Mittelbandabschnittes 5 sowie des ersten Seitenbandabschnittes 7 zueinander flächig bzw. fluchtend ausgerichtet sind. Hier wird unter flächig verstanden, dass zwischen den beiden Oberflächen des Mittelbandabschnittes 5 und des ersten Seitenbandabschnittes 7 kein Versatz in Richtung der Wandstärke 23, 24 erfolgt und somit eine ebenflächige relative Anordnung zueinander ausgebildet ist.
Durch die zuvor beschriebenen Unterschiede in der Wandstärke 23, 24 überragt die hier oben angeordnete Oberfläche bzw. Außenseite 21 des Mittelbandabschnittes 5 die unmittelbar daneben angeordnete Oberseite bzw. Oberfläche des ersten Seitenbandabschnittes 7.

Wird ein Schweißvorgang zur Verbindung der beiden Längsseitenkanten 3, 11 bzw. 4, 12 eingesetzt, sind die jeweils einander zugewendeten Längsseitenkanten 3, 11 bzw. 4, 12 entsprechend mit einer Schweißnahtvorbereitung aufzubereiten. Um den Schweißspalt auf ein Ausmaß bis hin zu einem Aneinanderliegen zu reduzieren, sind die Längsseitenkanten 3, 4 sowie 11, 12 mit einer ausreichenden Geradheit in Richtung ihrer Längserstreckung mit möglichst geringen Toleranzabweichungen auszubilden. Damit wird eine hohe Qualität der Längsverbindungsnähte 9, 10 sichergestellt. Ist die Ausbildung der Längsverbindungsnähte 9, 10 erfolgt, kann gegebenenfalls in diesem Zustand bereits eine Bearbeitung der Längsverbindungsnaht 9, 10 im Bereich der die Innenfläche 22 bildenden Seite des Metallbandes 1 erfolgen. Für diesen Vorgang wäre es möglich, das Metallband 1 umfassend den Mittelbandabschnitt 5 sowie die Seitenbandabschnitte 7, 8 an den einander zugewendeten Stirnenden 13, 14 zu einem endlos umlaufenden Band zu verbinden. Dabei kann die später die Innenfläche 22 bildende Oberfläche für diesen Bearbeitungsvorgang die Außenseite bilden. Um eine möglichst ebenflächige Innenfläche 22 auszubilden, wird je nach gewünschter Oberflächenqualität ein entsprechender Schleifvorgang und/oder Poliervorgang eingesetzt.

Ist die Innenfläche 22 soweit ebenflächig und porenfrei ausgebildet, kann die Querverbindungsnaht 15 aufgetrennt und somit die einander zugewendeten Stirnenden 13, 14 voneinander gelöst werden. Anschließend daran kann das Metallband 1 gewendet werden, wobei dann die zuvor die Außenseite bildende Innenfläche 22 nun im Bereich der Innenseite des Metallbandes 1 angeordnet ist. Für den weiteren Bearbeitungsvorgang erfolgt zumeist ein neuerliches Verbinden der Stirnenden 13, 14 durch Herstellen einer neuen Querverbindungsnaht 15. Anschließend daran wird das gesamte Metallband 1 im Bereich der nun die Außenfläche 21 bildenden Oberfläche durch einen entsprechenden Bearbeitungsvorgang hin bis zur gewünschten Oberflächenqualität und Porenfreiheit bearbeitet, beispielsweise geschliffen und/oder poliert.

Durch diesen gewählten, umlaufenden Bearbeitungsvorgang des Metallbandes 1 kann so eine hochqualitative und porenfreie Ausbildung des Metallbandes 1 erzielt werden.

Bevorzugt handelt es sich bei den Endlosbändern 1 um hochglanzpolierte Bänder, wobei die Oberfläche der Bandaußenseite und/oder der Bandinnenseite über den gesamten Bereich der Oberfläche einen konstanten Glanzgrad bei einer unter einem Messwinkel von 60° oder 85° durchgeführten Glanzgradmessung aufweist.

Im Zuge dieses Bearbeitungsvorganges können dann auch noch die das Metallband 1 begrenzenden Längsseitenkanten 16, 17 bearbeitet werden, sodass das Metallband 1 über dessen gesamte Längserstreckung nicht nur eine gleiche Gesamtbreite 2 aufweist, welche mit geringsten Toleranzen ausgeführt werden kann, sondern auch ein exakter Parallellauf zwischen den voneinander in Querrichtung voneinander distanzierten Längsseitenkanten 16, 17 erzielbar ist.

Wie bereits zuvor beschrieben, erfolgt die Ausbildung der Längsverbindungsnähte 9, 10 bevorzugt durch einen Schweißprozess. Um eine möglichst kompakte Nahtausbildung zu erzielen, werden die miteinander zu verbindenden Längsseitenkanten 3, 4 des Mittelbandabschnittes 6 unmittelbar benachbart bzw. stirnseitig aneinanderstoßend zu den Längsseitenkanten 11, 12 der Seitenbandabschnitte 7, 8 angeordnet. Bei der Durchführung des Schweißvorganges kann dieser entweder nur einseitig im Bereich der Außenfläche 21 oder im Bereich der Innenfläche 22 erfolgen. Es wäre aber auch möglich, beidseitig der auszubildenden Schweißnaht jeweils eine Schweißvorrichtung anzuordnen und gleichzeitig ausgehend von der Außenfläche 21 sowie der Innenfläche 22 den Schweißvorgang durchzuführen.

Um im Bereich der Außenfläche 21 eine möglichst geringe Breite der Schweißnaht zu erhalten, kann der Schweißvorgang ausgehend von der Innenfläche 22 hin zur Außenfläche 21 erfolgen, wobei dann die Wurzel der Schweißnaht dem Bereich der Außenfläche 21 des Metallbandes 1 zugewendet ist. diese Ausbildung der Schweißnaht ist vereinfacht in der Fig. 3 angedeutet.

Um eine besonders hohe Reinheit und Güte der Schweißverbindung unter Ausbildung einer Schweißnaht zu erzielen, ist es möglich, den Schweißvorgang in einem abgeschlossenen Raum mit definierten Umgebungsbedingungen durchzuführen. Dabei kann auch von sogenannten Reinraumbedingungen gesprochen werden. So kann beispielsweise vor der Zuführung der Umgebungsluft diese gefiltert und/oder gereinigt werden, anschließend daran gegebenenfalls auf eine vorbestimmte Temperatur erwärmt und/oder gekühlt werden und nachfolgend in diesem aufbereiteten Zustand dem abgeschlossenen Raum zur Durchführung des Schweißvorganges durchgeführt werden. Dies kann beispielsweise mittels einer von oben nach unten fallenden Strömung erfolgen, wobei die Zuführung z.B. im Deckenbereich des abgeschlossenen Raumes angeordnet ist. Bei der Aufbereitung der Umgebungsluft kann dieser auch noch zumindest ein zusätzlicher, gasförmiger Stoff beigemengt werden, welcher die Schweißbedingungen verbessert und so zu einer höheren Schweißnahtgüte führt.

Die dem abgeschlossenen Raum zugeführte Luft bzw. das gasförmige Medium kann im Bodenbereich nach dem Durchströmen des Innenraums abgeführt, insbesondere abgesaugt, werden, wobei hier auch ein geschlossener Kreislauf hin zur Versorgungseinheit möglich ist. Nach einem entsprechenden Reinigungs- und/oder Filterungsvorgang kann gegebenenfalls Primärluft zugesetzt werden und dieses neue gasförmige Gemisch kann gegebenenfalls unter weiterer Reinigung und/oder Aufbereitung wieder dem abgeschlossenen Raum zugeführt werden.

Das Metallband 1, insbesondere wenn dieses aus dem Mittelbandabschnitt 5 sowie zumindest einem der Seitenbandabschnitte 7, 8 gebildet ist, soll derart zusammengesetzt werden, dass der Werkstoff zur Bildung des Mittelbandabschnittes 5 sowie der Seitenbandabschnitte 7, 8 stets aus der gleichen Charge gewählt ist. Dies bedeutet, dass die Werkstoffqualität über den gesamten Querschnitt der Breite sowie über die Längserstreckung des Metallbandes 1 stets exakt gleich ist. So wird das Metallband 1 aus dem zueinander identischen Werkstoff eines gemeinsamen Vorproduktes gebildet. Bei der Herstellung des Vormaterials können wie bei jedem Herstellprozess zwar Qualitäten in den vorgegebenen Toleranzen der Zusammensetzung geschaffen werden, wobei dies jedoch zwischen unterschiedlichen Herstellvorgängen in diesen Grenzen differieren kann. Deshalb ist es besonders wichtig, dass im Hinblick auf den späteren Einsatz des Metallbandes 1 dieses nicht nur aus der gleichen Materialqualität sondern auch aus dem einen und demselben Vormaterial gebildet ist, welches zu einem gemeinsamen Blechstreifen mit vordefinierter Länge, Breite sowie Stärke umgeformt worden ist. Zur Erzielung einer hohen Oberflächenqualität sowie eine allgemeine durchgängige Qualität des Metallbandes 1 zu erreichen, wird bereits ausgehend von der Herstellung der Schmelze, dem anschließenden Vergießen zu Rohblöcken und dem anschließenden Umformen und Bandwalzen eine hohe Sorgfalt aufgewendet, um den strengen Qualitätsanforderungen gerecht zu werden. Der auf einer Rolle aufgewickelte Blechstreifen zur Bildung des Metallbandes 1 wird als sogenanntes Vormaterial bezeichnet. Je nach Länge des herzustellenden Metallbandes 1 wird dieses gegebenenfalls mit einer ausreichenden Überlänge von der Rolle des Vormaterials abgespult und abgetrennt. Anschließend daran erfolgt ein erster Richtvorgang zur Herstellung eines planen Bandes bzw. Streifens in Bezug auf Querwölbung und Handdifferenz. Anschließend daran erfolgt eine Inspektion auf mögliche Oberflächenfehler, um jene Seite bzw. Fläche auszuwählen, welche später die Außenfläche 21 des Metallbandes 1 ausbilden soll. Die Außenfläche 21 des Metallbandes wird in diesem Dokument auch als Bandaußenfläche 21 bezeichnet. Anschließend daran wird der Blechstreifen bzw. das Band auf die benötigte Breite gesäumt, was beispielsweise durch einen Schabvorgang oder ähnliches erfolgen kann. Dann erfolgt die Vorbereitung der Längsseitenkanten 3, 4 des Mittelbandabschnittes 5, welche später die Schweißkanten bilden. Diese Längsseitenkanten 3, 4 können dabei gebürstet und/oder geschabt und/oder geschliffen werden, um Verunreinigungen bzw. Anlagerungen, wie Oxydschichten oder dergleichen, zu entfernen.

Anschließend daran wird der bzw. werden die an den Mittelbandabschnitt 5 anzubringenden Seitenbandabschnitte 7, 8 ebenfalls plangerichtet, falls dies nicht bereits zuvor gemeinsam mit dem gesamten Blechstreifen erfolgt ist. Dann wird eine Inspektion auf Oberflächenfehler durchgeführt, um wiederum festlegen zu können, welche Oberfläche bzw. Seite des Seitenbandabschnittes 7, 8 später die Außenfläche 21 des Metallbandes 1 bilden soll. Dann werden die Seitenbandabschnitte 7, 8 auf deren benötigte Breite gesäumt, wie dies bereits zuvor für den Mittelbandabschnitt 5 beschrieben worden ist. Dann werden jene Längsseitenkanten 11, 12, welche mit den Längsseitenkanten 3, 4 des Mittelbandabschnittes 5 verbunden werden, einer Schweißnahtvorbereitung unterzogen. Vor Durchführung des Schweißvorganges werden die dafür vorgesehenen Längsseitenkanten 11, 12 von möglichen Verunreinigungen bzw. Anlagerungen gereinigt, wobei dies durch bürsten, schaben oder dergleichen erfolgen kann.
Ist diese Vorbereitung soweit durchgeführt, erfolgt der Verbindungsvorgang des Mittelbandabschnittes 5 mit dem oder den Seitenbandabschnitten 7, 8. Anschließend daran werden mögliche Schweißnahtüberhöhungen abgetragen, wobei dies beispielsweise durch einen Schleifprozess erfolgen kann. Gegebenenfalls wird ein Richtvorgang des gesamten Metallbandes 1 erfolgen, falls dies notwendig sein sollte. Je nach Anforderung der Oberflächenqualität wird dann das Metallband 1 außen und/oder innen geschliffen, wobei nachfolgend ein Nachrichtvorgang erfolgen kann. Anschließend an diesen erfolgt ein weiterer Schleifvorgang zur Ausbildung einer feineren Oberflächenqualität. Dies kann als Feinschleifvorgang bezeichnet werden.

Sind diese Bearbeitungsvorgänge abgeschlossen, kann das Metallband 1 zu einem endlos umlaufenden Band im Bereich seiner Stirnenden 13, 14 durch die Querverbindungsnaht 15 verbunden werden. Dies kann durch einen Schweißvorgang, insbesondere mit einer Schutzgasschweißung, einer Laserschweißung oder dergleichen erfolgen. Anschließend daran wird ein möglich auftretender Schweißnahtüberstand der Querverbindungsnaht 15 im Bereich der Außenfläche 21 und/oder Innenfläche 22 verschliffen. Die Innenfläche 22 wird in diesem Dokument auch synonym als Bandinnenseite 21 bezeichnet. In diesem endlosen Zustand des Metallbandes 1 erfolgt der endgültige Schleifvorgang, wodurch das Band in Bezug auf seine Wandstärke bzw. Dicke mit hoher Präzision hergestellt wird. Darüber hinaus kann aber auch seine Breite über die gesamte Längserstreckung präzise hergestellt werden. Zwischenzeitlich können Zwischenkontrollen bzw. Zwischenprüfungen durchgeführt werden. Je nach geforderter Oberflächenqualität erfolgt ein Poliervorgang des Metallbandes 1 zumindest im Bereich seiner Außenfläche 21, wobei dies je nach Qualitätsanforderungen auch an der Innenfläche 22 erfolgen kann. Nachfolgend wird eine Zwischeninspektion des Metallbandes 1 durchgeführt, wobei es möglich ist, aufgefundene Fehler durch Reparatur zu beheben.

So können Poren, welche eine Größe von über 30 µm, insbesondere von über 50 µm bis über 70 µm, in der Bandoberfläche vorhanden sind, detektiert und in einem Reparaturschritt die Poren repariert werden. eine Reparatur der Poren durch Umformen, Fügen, Spanen, Richten, Wärmebehandlung, Schleifen, Schmieden, Schweißen oder Beschichten des Endlosbandes erfolgt. So kann beispielsweise in einem Bereich um eine Pore ein Materialabtrag erfolgen, beispielsweise durch Fräsen, Körnern, Schleifen, Spanen, Schaben, etc. und in diesen Bereich hernach ein Füllmaterial eingesetzt werden, welches beispielsweise durch Erwärmen mit der Bandoberfläche verbunden wird. Hernach kann überstehendes Material abgeschliffen werden. Alternativ hierzu könnte auch von der der Pore gegenüberliegenden Bandinnenseite mit einer entsprechenden Vorrichtung, beispielsweise ein Meisel, die Pore durch einen Schlag mit der Vorrichtung nach außen gewölbt und sodann abgeschliffen werden. Auch ließen sich Poren durch Beschichten des Bandes mit mindestens einer Schicht eines Beschichtungsmaterials reparieren. Als Beschichtungsverfahren kann beispielsweise ein Pulverbeschichtungsverfahren zum Einsatz kommen. Hierbei könnte das Band elektrostatisch aufgeladen werden. Auch wäre es möglich, anstelle einer großflächigen Beschichtung des Bandes lediglich Poren mit einem Füllmaterial aufzufüllen. Dieses Füllmaterial kann muss aber nicht dem Grundmaterial des Bandes entsprechen. So kann neben Metall auch Kunststoff als Füllmaterial zum Einsatz kommen.

Nachfolgend kann ein weiterer Vorpoliervorgang erfolgen bzw. dieser fortgesetzt werden. Nach Abschluss desselben kann ein weiterer Poliervorgang zur Herstellung der endgültigen Oberflächenqualität durchgeführt werden. Ist dieser Vorgang abgeschlossen, wird eine interne Qualitätsprüfung und Inspektion durchgeführt, wobei anschließend zumeist eine eigene Kundenabnahme zur endgültigen Übernahme erfolgt.

Der Vorpoliervorgang des Metallbandes 1 kann beispielsweise mit einem Schleifstein erfolgen. Gegebenenfalls können dabei noch Zusatz-Hilfsstoffe Anwendung finden. Der Fertigpoliervorgang kann seinerseits beispielsweise mit einem Baumwolltuch erfolgen.

Je nach Einsatzzweck des Metallbandes 1 können diese beispielsweise aus den unterschiedlichsten Edelstahlmaterialien, Kohlenstoffstählen oder Titan und dies in unterschiedlichen Qualitäten gebildet sein. Die Metallbänder können als Prozess- oder Transportbänder Anwendung finden.

Der strukturelle Aufbau des Verbindungsbereiches kann gleichartig mit daran angrenzenden anderen Bereichen des Bandkörpers ausgebildet sein kann. Somit kann der Bandkörper über seine gesamte in Umfangsrichtung des Endlosbandes 1 verlaufende Längserstreckung einen gleichartigen strukturellen Aufbau aufweisen.

Die gesamte Oberfläche der Bandaußenseite und die gesamte Oberfläche der Bandinnenseite können ebenfalls weitgehend homogen ausgebildet sein. An dieser Stelle sei darauf hingewiesen, dass gemäß dieser Variante der Erfindung die Struktur des Bandes nicht über das gesamte Endlosbandes 1 absolut gleichbleibend sein muss, sondern Änderungen in der Struktur des Bandes auftreten können, welche sich in einem natürlichen Schwankungsbereich befinden. Das Endlosband 1 kann gemäß diese Variante der Erfindung jedoch einen Aufbau aufweisen, der durch keine größere, durch die Herstellung des Endlosbandes 1 verursachte, zusammenhängende Unstetigkeitsstelle, wie eine Schweißnaht, unterbrochen ist. Das Endlosband 1 kann sich somit auch dadurch auszeichnen, dass es keine sichtbaren Nähte, insbesondere Schweißnähte aufweist.

Das Endlosband 1 kann über seine gesamte Umfangslänge eine gleichbleibende Wärmekapazität sowie gleiche bzw. konstante optische und mechanische Eigenschaften aufweisen. Darunter ist zu verstehen, dass bei einer Zerlegung des gesamten Endlosbandes in beliebige gleichgroße Abschnitte, jeder dieser Abschnitte stets die gleichen Eigenschaften aufweist, wie die anderen Abschnitte. Dadurch wird sichergestellt, dass das Endlosband 1 keine Bereiche aufweist, die schwächer ausgebildet sind, als andere Abschnitte des Bandes.

Zur Herstellung eines nahtlosen Endlosbandes 1 eignet sich besonders ein Schmiedeprozess, insbesondere ein Prozess zum Kaltumformen des Ausgangsmaterials.

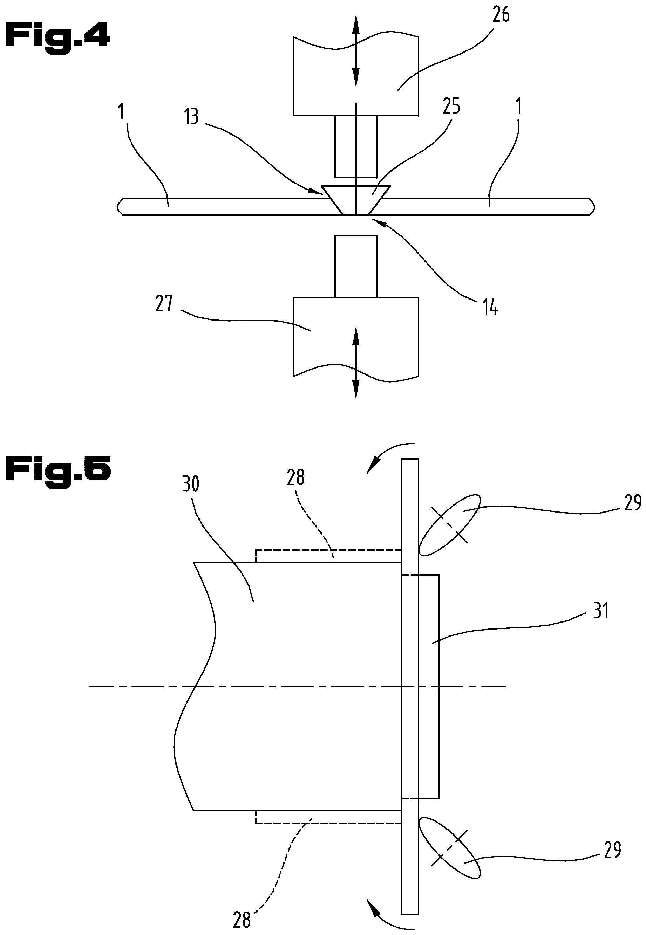

Zur Herstellung eines nahtlosen Endlosbandes 1 der Bandkörper als bandförmiges Ausgangsmaterial vorliegen. In einem ersten Schritt können gemäß Fig. 4 freie stirnseitige Endbereiche 13, 14 des Bandkörpers einander angenähert werden, sodass sich die stirnseitigen Endbereiche 13, 14 gegenüberliegen. In einen zwischen den beiden Endbereichen gebildeten Spalt kann ein Einlagematerial 25 eingelegt werden. Das Einlagematerial 25 besteht bevorzugt aus dem gleichen Material wie der Bandkörper. Das Einlagematerial 25 und die beiden Endbereiche können sodann durch Schläge mit Hämmern 26, 27 umgeformt und miteinander verbunden werden.

Gemäß einer anderen in Fig. 5 dargestellten Möglichkeit zur Herstellung eines nahtlosen Endlosbandes 1 kann es vorgesehen sein, eine Metallplatine 28 zu verwenden, welche mittels Rollen 29 über einen Dorn 30 mit einem zylinderförmigen Querschnitt getrieben wird. Auf diese Weise ergibt sich eine zylindermantelförmige Hülse, durch welche der Bandkörper gebildet ist. Der Einspannteil der Metallplatine 28, der durch eine Klemmvorrichtung 31 gehalten wird, kann nach Fertigstellung der zylindermantelförmigen Hülse abgeschnitten werden, sodass sich ein durchgehendes Metallband ergibt.

Zur Herstellung des nahtlosen Bandes können auch weitere Zwischenschritte, vorgesehen sein, welche eine Kombination aus Kalt- und Warmumformprozessen mit oder ohne zwischengeschalteten Wärmebehandlungen umfassen.

Da Metallbänder 1 für die Herstellung von Membranen, Folien und Filmen eine sehr hohe Oberflächengüte aufweisen, muss der Werkstoff des Bandkörpers beispielsweise zum Aufbringen einer strukturlosen Spiegelpolitur mit einer Rauhtiefe Ra (arithmetischer Mittenrauwert) oder Rz (Gemittelte Rauhtiefe) Ra ≤0,02µm; Rz ≤ 0,1 µm geeignet sein. Dies nicht nur im Bereich der Oberflächen des Metallbandes 1 sondern auch im Bereich von Verbindungsstellen zwischen den einzelnen Bandabschnitten 5, 7, 8. Davon sind die Längsverbindungsnähte 10, 11 betroffen. Das Flächenausmaß bei größeren Bändern kann dabei auch mehrere 100 m² betragen.

Dies lässt sich durch einen sehr hoher Reinheitsgrad des Materials des Bandkörpers (niedriger Phosphor- Schwefel- und Aluminiumgehalt) erzielen. Bevorzugt wird für den Bandkörper ein sehr dichtes Material ohne Poren verwendet, welches bevorzugter Weise auch keine harte Phasen aufweist, wie sie durch Stabilisierungselemente oder härtesteigernde Elemente verursacht werden können (z.B. Titan, Kobalt, Tantal, Stickstoff).

Wie bereits einleitend erwähnt, sind für die Folienherstellung sehr hohe Anforderungen an die Oberflächengüte sowie Reinheit des Werkstoffes des Metallbandes 1 zu stellen. Aufgrund der geringen Einschlüsse im Werkstoff führt dies zu einer nahezu durchgängigen, einheitlichen Oberflächenqualität, wodurch auch das darauf hergestellte Folienmaterial eine ebenso hohe Güte aufweist.

Abschließend sei erwähnt, dass das Metallband 1 auch nur den Mittelbandabschnitt 5 umfassen kann, wenn die damit erzielbare Breite des herzustellenden Bauteils für die nachfolgende Anwendung ausreichend ist.

Der Ordnung halber sei darauf hingewiesen, dass zum besseren Verständnis des Aufbaus des Endlosbandes diese bzw. dessen Bestandteile teilweise unmaßstäblich und/oder vergrößert und/oder verkleinert dargestellt wurden.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständlichen Erfindung im Können des auf diesem technischen Gebiet tätigen Fachmannes liegen. Es sind auch sämtliche denkbaren Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang, wie er durch die Ansprüche festgelegt ist, mit umfasst.

### Bezugszeichenaufstellung

- 1: Metallband
- 2: Gesamtbreite
- 3: Längsseitenkante
- 4: Längsseitenkante
- 5: Mittelbandabschnitt

- 6: Bandbreite
- 7: erster Seitenbandabschnitt
- 8: zweiter Seitenbandabschnitt
- 9: Längsverbindungsnaht
- 10: Längsverbindungsnaht

- 11: Längsverbindungskante
- 12: Längsverbindungskante
- 13: Stirnende
- 14: Stirnende
- 15: Querverbindungsnaht

- 16: Längsseitenkante
- 17: Längsseitenkante
- 18: Abstand
- 19: Breite
- 20: Breite

- 21: Außenfläche
- 22: Innenfläche
- 23: Wandstärke
- 24: Wandstärke
- 25: Einlagematerial

- 26: Hammer
- 27: Hammer
- 28: Metallplatine
- 29: Rollen
- 30: Dorn

- 31: Klemmvorrichtung

## Patentansprüche

1. Endlosband (1) mit einem Bandkörper aus Metall, wobei das Endlosband eine Bandaußenseite (21) und eine Bandinnenseite (22) aufweist, die durch Seitenflächen, miteinander verbunden sind, wobei jede der Seitenflächen einen kleineren Flächeninhalt aufweist, als die Bandaußenseite (21) oder die Bandinnenseite (22), wobei das Endlosband (1) über die gesamte Oberfläche der Bandaußenseite (21) betrachtet keine Poren oder nur Poren mit einer Größe bis maximal 70 µm aufweist, **dadurch gekennzeichnet, dass** es zumindest eine Verbindungsstelle (15) aufweist, an welcher stirnseitige Endbereiche (13,14) des Endlosbandes (1) miteinander verbunden sind, wobei in einem Bereich der Verbindungstelle (15) keine unter der Oberfläche der Verbindungsstelle (15) eingeschlossenen Hohlräume vorhanden sind, wobei die Bandaußenseite (21) eine polierte Oberfläche aufweist.

2. Endlosband nach Anspruch 1, **dadurch gekennzeichnet, dass** das Endlosband über die gesamte Oberfläche der Bandinnenseite (22) betrachtet keine Poren oder nur Poren mit einer Größe bis zu maximal 70 µm aufweist.

3. Endlosband nach Anspruch 1, **dadurch gekennzeichnet, dass** die Verbindungsstelle (15) eine Schweißnaht ist.

4. Endlosband nach einem der Ansprüche 1 bis 3, **dadurch gekennzeichnet, dass** es zumindest zwei längsseitig verbundene Bänder (5, 7, 8) aufweist, wobei im Bereich einer Verbindungsstelle (9, 10) der zumindest zwei Bänder (5, 7, 8) keine unter der Oberfläche der Verbindungsstelle eingeschlossenen Hohlräume vorhanden sind.

5. Endlosband nach Anspruch 4, **dadurch gekennzeichnet, dass** die Verbindungsstelle (9,10) eine Schweißnaht ist.

6. Endlosband nach einem der Ansprüche 1 bis 5, **dadurch gekennzeichnet, dass** die Oberfläche der Bandaußenseite (21) und/oder der Bandinnenseite (22) über den gesamten Bereich der Oberfläche homogen ausgebildet ist.

7. Endlosband nach einem der Ansprüche 1 bis 6, **dadurch gekennzeichnet, dass** die Oberfläche der Bandaußenseite (21) und/oder der Bandinnenseite (22) durch zumindest eine auf den Bandkörper aufgetragene Schicht gebildet ist.

8. Endlosband nach einem der Ansprüche 1 bis 7, **dadurch gekennzeichnet, dass** die Oberfläche der Bandaußenseite (21) und/oder der Bandinnenseite (22) über den gesamten Bereich der Oberfläche einen konstanten Glanzgrad bei einer unter einem Messwinkel von 60° oder 85° durchgeführten Glanzgradmessung aufweist.

9. Endlosband nach einem der Ansprüche 1 bis 8, **dadurch gekennzeichnet, dass** die Bandinnenseite (22) eine polierte Oberfläche aufweist.

10. Endlosband nach einem der Ansprüche 1 bis 9, **dadurch gekennzeichnet, dass** das Endlosband (1) nahtlos ausgebildet ist.

11. Endlosband nach Anspruch 10, **dadurch gekennzeichnet, dass** der Bandkörper über seine gesamte in Umfangsrichtung des Endlosbandes (1) verlaufende Längserstreckung einen gleichartigen strukturellen Aufbau aufweist

12. Endlosband nach Anspruch 10 oder 11, **dadurch gekennzeichnet, dass** die Bandaußenseite (21) und/oder die Bandinnenseite (22) jeweils eine über ihre gesamte in Umfangsrichtung des Endlosbandes (1) verlaufende Längserstreckung gleichartige Oberflächenausbildung aufweisen.

13. Endlosband nach einem der Ansprüche 10 bis 12, **dadurch gekennzeichnet, dass** es über seine gesamte Umfangslänge eine gleichbleibende Wärmekapazität und/oder gleiche optische und/oder mechanische Eigenschaften aufweist.

14. Endlosband nach einem der Ansprüche 10 bis 13, **dadurch gekennzeichnet, dass** es einen Verbindungsbereich (15) aufweist, an welchem stirnseitige Endbereiche (13, 14) des Bandkörpers miteinander verbunden sind, sodass ein Ring gebildet wird, wobei der strukturelle Aufbau des Verbindungsbereiches (13,14) gleichartig mit daran angrenzenden anderen Bereichen des Bandkörpers ausgebildet ist.

15. Verfahren zur Herstellung eines Endlosbandes (1) mit einem Bandkörper aus Metall, wobei das Endlosband (1) eine Bandaußenseite (21) und eine Bandinnenseite (22) aufweist, die durch Seitenflächen, miteinander verbunden sind, wobei jede der Seitenflächen einen kleineren Flächeninhalt aufweist, als die Bandaußenseite (21) oder die Bandinnenseite (22), **dadurch gekennzeichnet, dass** in einem Überprüfungsschritt überprüft wird, ob Poren mit einer Größe von über 30 µm, insbesondere von über 10 bis 70 µm, in der Oberfläche der Bandaußenseite (21) und/oder der Bandinnenseite (22) vorhanden sind, und in einem dem Überprüfungsschritt zeitlich nachfolgenden Reparaturschritt zumindest derartige Poren repariert werden, wobei während eines Verbindens zweier oder mehrerer Bänder (5, 7, 8) entlang von Längskanten (11,12) der Bänder (5, 7, 8) zu einem einzigen Band größerer Breite, welches dann an Stirnseiten zu dem Endlosband (1) verbunden wird und/oder einem Verbinden der Stirnseiten (13, 14) eines Bandkörpers zu dem Endlosband (1) überwacht wird, ob sich in der jeweiligen Verbindungsstelle (15, 9, 10) Hohlräume bilden.

16. Verfahren nach Anspruch 15, **dadurch gekennzeichnet, dass** eine Reparatur der Poren durch Umformen, Fügen, Spanen, Richten, Wärmebehandlung, Schleifen, Schmieden, Schweißen oder Beschichten des Endlosbandes erfolgt.

17. Verfahren nach Anspruch 16, **dadurch gekennzeichnet, dass** das Verbinden durch ein Schweißverfahren, insbesondere Laserschweißen, MIG/MAG-Schweißen, WIG-Schweißen, Rührschweißen, Reibrührschweißen, Ultraschallschweißen, Widerstandsschweißen, Feuerschweißen, Schweißen mit und ohne Schutzgas sowie Schweißen in einer Reinraumatmosphäre, erfolgt.

18. Verfahren nach Anspruch 17, **dadurch gekennzeichnet, dass** ein Schweißbad während der Verbindens permanent überwacht wird und mit zumindest einem Sensor elektromagnetische Emissionen erfasst werden, wobei erfasste Istwerte für die Emissionen mit Sollwerten verglichen werden, wobei bei einer vorgebbaren Abweichung der Istwerte von den Sollwerten eine den von den Sollwerten abweichenden Istwerten entsprechende Stelle einer Schweißnaht nochmals geschweißt wird, wobei dieser Vorgang solange wiederholt wird, an keiner Stelle der Schweißnaht keine außerhalb einer Toleranzgrenze gelegene Abweichung der erfassten Istwerte von den Sollwerten erfasst wurde.

19. Verfahren nach Anspruch 18, **dadurch gekennzeichnet, dass** die erfassten Istwerte aufgezeichnet und einer individuellen Identifikation eines bearbeiteten Endlosbandes zugewiesen und gemeinsam mit dieser gespeichert werden.

20. Verfahren nach einem der Ansprüche 15 bis 19, **dadurch gekennzeichnet, dass** zumindest die Verbindungsstellen nach dem Verbinden des Bandes zu dem Endlosband oder dem Verbinden der Bänder zu einem Band, nachbearbeitet werden, insbesondere durch Schleifen, Strahlen, insbesondere Kugelstrahlen, Hämmern, insbesondere hochfrequentes Hämmern, und/oder Wärmebehandlung.

21. Verfahren nach Anspruch 15 oder 20, **dadurch gekennzeichnet**, Endlosband durch einen Umformprozess hergestellt wird.

22. Verfahren nach Anspruch 21, **dadurch gekennzeichnet, dass** der Umformprozess ein Schmiedeprozess ist, wobei der Schmiedeprozess ein Kaltumformprozess oder eine Kombination aus Kalt- und Warmumformprozessen mit oder ohne zwischengeschalteten Wärmebehandlungen ist.

23. Verfahren nach Anspruch 21 oder 22, dass der Bandkörper als bandförmiges Ausgangsmaterial vorliegt und freie stirnseitige Endbereiche (13, 14) des Bandkörpers durch den Schmiedeprozess miteinander verbunden werden, wobei die stirnseitigen Endbereiche (13, 14) des Bandkörpers einander angenähert werden, sodass sich die stirnseitigen Endbereiche (13, 14) gegenüberliegen und ein Einlagematerial (25) in einen zwischen den beiden Endbereichen (13, 14) gebildeten Spalt ein- und/oder darüber gelegt wird, welches aus dem gleichen Material wie der Bandkörper besteht, wobei das Einlagematerial (25) und die beiden Endbereiche (13, 14) durch Schläge von zumindest einem Hammer (26, 27) umgeformt und miteinander verbunden werden.

24. Verfahren nach Anspruch 23, **dadurch gekennzeichnet, dass** das Ausgangsmaterial zur Herstellung des Endlosbandes (1) eine Metallplatine (28) ist, welche durch Walzen über einen Dorn (30) mit einem zylinderförmigen Querschnitt getrieben wird, sodass sich eine zylindermantelförmige Hülse ergibt, durch welche der Bandkörper gebildet ist.

## Claims

1. An endless belt (1) with a belt body made of metal, wherein the endless belt has an outer belt side (21) and an inner belt side (22), which are joined with one another by lateral surfaces, wherein each of the lateral surfaces has a smaller surface area than the outer belt side (21) or the inner belt side (22), wherein the endless belt (1), viewed over the entire surface of the outer belt side (21), has no pores, or only pores with a maximum size of up to 70 µm, **characterised in that**, it has at least one joint (15), at which front facial end regions (13, 14) of the endless belt (1) are joined with one another, wherein in a region of the joint (15) no enclosed cavities are present under the surface of the joint (15), wherein the outer belt side (21) has a polished surface.

2. The endless belt in accordance with claim 1, **characterised in that**, the endless belt (1), viewed over the entire surface of the inner belt side (22), has no pores, or only pores with a maximum size of up to 70 µm.

3. The endless belt in accordance with claim 1, **characterised in that** the joint (15) is a weld seam.

4. The endless belt in accordance with one of the claims 1 to 3, **characterised in that**, it has at least two belts (5, 7, 8) joined along longitudinal faces, wherein in the region of a joint (9, 10) of the at least two belts (5, 7, 8), no enclosed cavities are present under the surface of the joint.

5. The endless belt in accordance with claim 4, **characterised in that**, the joint (9, 10) is a weld seam.

6. The endless belt in accordance with one of the claims 1 to 5, **characterised in that**, the surface of the outer belt side (21) and/or the inner belt side (22) is constructed homogeneously over the entire surface region.

7. The endless belt in accordance with one of the claims 1 to 6, **characterised in that**, the surface of the outer belt side (21) and/or the inner belt side (22) is formed by at least one layer applied onto the belt body.

8. The endless belt in accordance with one of the claims 1 to 7, **characterised in that**, the surface of the outer belt side (21) and/or the inner belt side (22) has a constant level of gloss over the whole surface region, in a measurement of gloss level executed at a measurement angle of 60° or 85°.

9. The endless belt in accordance with one of the claims 1 to 8, **characterised in that**, the inner belt side (22) has a polished surface.

10. The endless belt in accordance with one of the claims 1 to 9, **characterised in that**, the endless belt (1) is seamlessly constructed.

11. The endless belt in accordance with claim 10, **characterised in that**, the belt body has an identical structural configuration over its entire length running in the peripheral direction of the endless belt (1).

12. The endless belt in accordance with claim 10 or 11, **characterised in that**, the outer belt side (21) and/or the inner belt side (22) in each case have an identical surface construction over their entire length running in the peripheral direction of the endless belt (1).

13. The endless belt in accordance with one of the claims 10 to 12, **characterised in that**, over its entire peripheral length it has a constant heat capacity and/or the same optical and/or mechanical properties.

14. The endless belt in accordance with one of the claims 10 to 13, **characterised in that**, it has a joining region (15) in which front facial end regions (13, 14) of the endless belt are joined with one another, so that a ring is formed, wherein the structural configuration of the joining region (13, 14) is constructed in an identical manner to the other regions of the belt body that are adjacent to it.

15. A method for the manufacture of at least one endless belt (1), with a belt body made of metal, wherein the endless belt (1) has an outer belt side (21) and an inner belt side (22), which are joined with one another by lateral surfaces, wherein each of the lateral surfaces has a smaller surface area than the outer belt side (21) or the inner belt side (22), **characterised in that**, in a checking step a check is performed as to whether pores with a size of more than 30 µm, in particular of more than 10 up to 70 µm, are present in the surface of the outer belt side (21) and/or the inner belt side (22), and in a repair step, following the checking step in time, at least such pores are repaired, wherein during a joining of two or a plurality of belts (5, 7, 8) along longitudinal edges (11, 12) of the belts (5, 7, 8) to form a single belt of greater width, which is then joined at front faces to form the endless belt (1), and/or a joining of the front faces (13, 14) of a belt body to form the endless belt (1), monitoring takes place as to whether cavities are formed in the respective joint (15, 9, 10).

16. The method in accordance with claim 15, **characterised in that**, a repair of the pores takes place by means of forming, joining, machining, straightening, heat treatment, grinding, forging, welding or coating of the endless belt.

17. The method in accordance with claim 16, **characterised in that**, joining takes place by means of a welding method, in particular laser welding, MIG/MAG-welding, TIG-welding, stir welding, friction stir welding, ultrasound welding, resistance welding, forge welding, welding with and without a protective gas, and also welding in a clean room atmosphere.

18. The method in accordance with claim 17, **characterised in that**, during the joining process a weld pool is permanently monitored and electromagnetic emissions are registered with at least one sensor, wherein actual values registered for the emissions are compared with design values, wherein in the event of a specifiable deviation of the actual values from the design values, a point on a weld seam at which the actual values deviate from the design values is re-welded, wherein the said process is repeated until at no point on the weld seam has any deviation, lying outside a tolerance limit, of the actual values registered from the design values, been registered.

19. The method in accordance with claim 18, **characterised in that**, the actual values registered are recorded and assigned to an individual identification of a processed endless belt, and are stored together with the latter.

20. The method in accordance with one of the claims 15 to 19, **characterised in that**, after the joining of the belt to form the endless belt, or after the joining of the belts to form one belt, at least the joints are reworked, in particular by means of grinding, blasting, in particular shot blasting, hammering, in particular high-frequency hammering, and/or by heat treatment.

21. The method in accordance with claim 15 or 20, **characterised in that**, an endless belt is manufactured by means of a forming process.

22. The method in accordance with claim 21, **characterised in that**, the forming process is a forging process, wherein the forging process is a cold forming process, or a combination of cold and hot forming processes, with or without intermediate heat treatments.

23. The method in accordance with claim 21 or 22, **characterised in that**, the belt body exists as source material in the form of a web, and free front facial end regions (13, 14) of the belt body are joined with one another by means of the forging process, wherein the front facial end regions (13, 14) of the belt body are brought close to one another, so that the front facial end regions (13, 14) lie opposite one another, and an insert material (25) is laid into or above a gap formed between the two end regions (13, 14), which insert material consists of the same material as the belt body, wherein the insert material (25) and the two end regions (13, 14) are formed by blows from at least one hammer (26, 27), and are joined with one another.

24. The method in accordance with claim 23, **characterised in that**, the source material for the manufacture of the endless belt (1) is a metal sheet (28), which by means of rolling is forced over a mandrel (30) with a cylindrical cross-section, such that a sleeve in the form of a cylindrical casing ensues, by means of which the belt body is formed.

## Revendications

1. Bande sans fin (1) avec un corps de bande en métal, la bande sans fin comprenant un côté extérieur de bande (21) et un côté intérieur de bande (22) reliés entre eux par des surfaces latérales, chacune des surfaces latérales présentant une superficie supérieure au côté extérieur de la bande (21) ou au côté intérieur de la bande (22), la bande sans fin (1) ne présentant, sur toute la surface du côté extérieur de la bande (21), aucun pore ou uniquement des pores présentant une taille jusqu'à 70 µm maximum, **caractérisée en ce qu'**elle comprend au moins un point de liaison (15) au niveau duquel des zones d'extrémité frontale (13, 14) de la bande sans fin (1) sont reliées entre elles, aucun espace creux inclus sous la surface du point de liaison (15) ne se trouvant au niveau du point de liaison (15), le côté extérieur de la bande (21) présentant une surface polie.

2. Bande sans fin selon la revendication 1, **caractérisée en ce que** la bande sans fin ne présente, sur toute la surface du côté intérieur de la bande (22), aucun pore ou uniquement des pores avec une taille jusqu'à 70 µm maximum.

3. Bande sans fin selon la revendication 1, **caractérisée en ce que** le point de liaison (15) est un cordon de soudure.

4. Bande sans fin selon l'une des revendications 1 à 3, **caractérisée en ce qu'**elle comprend au moins deux bandes (5, 7, 8) reliées longitudinalement, aucun espace creux inclus sous la surface du point de liaison ne se trouvant dans la zone d'un point de liaison (9, 10) des au moins deux bandes (5, 7, 8).

5. Bande sans fin selon la revendication 4, **caractérisée en ce que** le point de liaison (9, 10) est un cordon de soudure.

6. Bande sans fin selon l'une des revendications 1 à 5, **caractérisée en ce que** la surface du côté extérieur de la bande (21) et/ou le côté intérieur de la bande (22) est réalisée de manière homogène sur toute la surface.

7. Bande sans fin selon l'une des revendications 1 à 6, **caractérisée en ce que** la surface du côté extérieur de la bande (21) et/ou du côté intérieur de la bande (22) est constituée d'au moins une couche appliquée sur le corps de bande.

8. Bande sans fin selon l'une des revendications 1 à 7, **caractérisée en ce que** la surface du côté extérieur de la bande (21) et/ou du côté intérieur de la bande (22) présente, sur toute la surface, un degré de brillance constant lors d'une mesure du degré de brillance effectuée avec un angle de mesure de 60° ou de 85°.

9. Bande sans fin selon l'une des revendications 1 à 8, **caractérisée en ce que** le côté intérieur de la bande (22) présente une surface polie.

10. Bande sans fin selon l'une des revendications 1 à 9, **caractérisée en ce que** la bande sans fin (1) est réalisée sans soudure.

11. Bande sans fin selon la revendication 10, **caractérisée en ce que** le corps de bande présente, sur toute son extension longitudinale s'étendant dans la direction circonférentielle de la bande sans fin (1), une structure uniforme.

12. Bande sans fin selon la revendication 10 ou 11, **caractérisée en ce que** le côté extérieur de la bande (21) et/ou le côté intérieur de la bande (22) présentent chacun, sur toute leur extension longitudinale s'étendant dans la direction circonférentielle de la bande sans fin (1), une surface uniforme.

13. Bande sans fin selon l'une des revendications 10 à 12, **caractérisée en ce qu'**elle présente, sur toute sa longueur circonférentielle, une capacité thermique constante et/ou des propriétés optiques et/ou mécaniques identiques.

14. Bande sans fin selon l'une des revendications 10 à 13, **caractérisée en ce qu'**elle présente une zone de liaison (15), au niveau de laquelle des zones d'extrémité frontales (13, 14) du corps de bande sont reliées entre elles, de façon à former un anneau, la structure de la zone de liaison (13, 14) étant réalisée de la même manière que d'autres zone adjacentes du corps de bande.

15. Procédé de fabrication d'une bande sans fin (1) avec un corps de bande en métal, la bande sans fin (1) comprenant un côté extérieur de bande (21) et un côté intérieur de bande (22), qui sont reliés entre eux par des surfaces latérales, chacune des surfaces latérales présentant une superficie inférieure au côté extérieur de la bande (21) ou au côté intérieur de la bande (22), **caractérisé en ce que**, dans une étape de contrôle, il est contrôlé si des pores avec une taille supérieure à 30 µm, plus particulièrement supérieure à 10 à 70 µm, existent dans la surface du côté extérieur de la bande (21) et/ou du côté intérieur de la bande (22) et dans une étape de réparation suivant l'étape de contrôle, au moins ces pores sont réparés, moyennant quoi, pendant une liaison de deux bandes (5, 7, 8) ou plus le long d'arêtes longitudinales (11, 12) des bandes (5, 7, 8) en une seule bande de largeur supérieure, qui est alors reliée au niveau des côtés frontaux à la bande sans fin (1) et/ou lors d'une liaison des côtés frontaux (13, 14) d'un corps de bande en une bande sans fin (1), il est surveillé si des espaces creux se forment au niveau du point de liaison (15, 9, 10) correspondant.

16. Procédé selon la revendication 15, **caractérisé en ce qu'**une réparation des pores a lieu par formage, jonction, enlèvement de copeaux, dressage, traitement thermique, ponçage, forgeage, soudure ou revêtement de la bande sans fin.

17. Procédé selon la revendication 16, **caractérisé en ce que** la liaison a lieu par un procédé de soudure, plus particulièrement une soudure au laser, une soudure MIG/MAG, une soudure WIG, une soudure à mouvement cyclique, une soudure par friction à mouvement cyclique, une soudure par ultrasons, une soudure à résistance, une soudure à la flamme, une soudure avec et sans gaz de protection ainsi qu'une soudure dans une atmosphère de salle blanche.

18. Procédé selon la revendication 17, **caractérisé en ce qu'**un bain de soudure est surveillé en permanence pendant la liaison et, avec au moins un capteur, les émissions électromagnétiques sont mesurées, les valeurs réelles mesurées pour les émissions étant comparées avec des valeurs de consigne, moyennant quoi, lors d'un écart, pouvant être prédéterminé, entre les valeurs réelles et les valeurs de consigne, un endroit d'un cordon de soudure, correspondant aux valeurs réelles différentes des valeurs de consigne, est soudé une nouvelle fois, ce processus étant répété jusqu'à ce qu'à aucun endroit du cordon de soudure un écart, entre les valeurs réelles mesurées et les valeurs de consigne, situé hors d'une limite de tolérance, ne soit mesuré.

19. Procédé selon la revendication 18, **caractérisé en ce que** les valeurs réelles mesurées sont enregistrées et attribuées à une identification individuelle d'une bande sans fin à usiner et enregistrées conjointement à celle-ci.

20. Procédé selon l'une des revendications 15 à 19, **caractérisé en ce que** au moins les points de liaison sont retouchés après la liaison de la bande avec la bande sans fin ou la liaison des bandes avec une bande, plus particulièrement par ponçage, projection, plus particulièrement projection de billes, martelage, plus particulièrement par martelage à haute fréquence et/ou par traitement thermique.

21. Procédé selon la revendication 15 ou 20, **caractérisé en ce que** la bande sans fin est fabriquée à l'aide d'un processus de formage.

22. Procédé selon la revendication 21, **caractérisé en ce que** le processus de formage est un processus de forgeage, le processus de forgeage étant un processus de formage à froid ou une combinaison de processus de formage à froid et à chaud avec ou sans traitement thermique intermédiaire.

23. Procédé selon la revendication 21 ou 22, **caractérisé en ce que** le corps de bande existe sous la forme d'un matériau de départ en forme de bande et des zones d'extrémité frontales libres (13, 14) du corps de bande sont reliées entre elles à l'aide du processus de forgeage, les zones d'extrémité frontales (13, 14) du corps de bande étant approchées l'une de l'autre, de façon à ce que les zones d'extrémité frontales (13, 14) se trouvent en face l'une de l'autre et un matériau intercalaire (25) est inséré et/ou appliqué dans un interstice formé entre les deux zones d'extrémité (13, 14), qui est constitué du même matériau que le corps de bande, le matériau intercalaire (25) et les deux zones d'extrémité (13, 14) étant formés et reliés entre eux par des impacts d'au moins un marteau (26, 27).

24. Procédé selon la revendication 23, **caractérisé en ce que** le matériau de départ pour la fabrication de la bande sans fin (1) est une platine métallique (28) qui est entraînée par des rouleaux par l'intermédiaire d'un mandrin (30) avec une section transversale cylindrique, de façon à obtenir un manchon cylindrique dont est constitué le corps de bande.
